# EUROPÄISCHE PATENTANMELDUNG

(11) **EP 4 050 438 A1**
(43) Veröffentlichungstag der Anmeldung: **31.08.2022**
(21) Anmeldenummer: 21158880.1
(22) Anmeldetag: 24.02.2021
(51) Int. Cl.: G05B 19/409

(54) **VORRICHTUNG ZUR DOKUMENTATION, PLANUNG, ÜBERWACHUNG UND/ODER STEUERUNG EINES INDUSTRIELLEN PROZESSES**

(71) Anmelder: Siemens Aktiengesellschaft, 80333 München (DE)
(72) Erfinder: Tacke, Dominik, 90562 Heroldsberg (DE); Villnow, Michael, 90765 Fürth (DE)

(57) **Zusammenfassung**

Die Erfindung gibt eine Vorrichtung (1) zur Dokumentation (8), Planung (8), Überwachung (8) und/oder Steuerung (8) eines industriellen Prozesses (6) an, aufweisend:
- mindestens ein Prozessmittel (5), ausweisend je eine aktive RFID-Einrichtung (3), ausgebildet Daten (4) des industriellen Prozesses (6) von mindestens einer passiven RFID-Antenne (9) zu lesen,
wobei sich die Daten (4) auf einen durchgeführten Arbeitsschritt des industriellen Prozesses (6), zu dem Zeitpunkt (7), zu welchem die aktive RFID-Einrichtung (3) die Daten (4) gelesen hat, beziehen,
- ein Planungsmodul (2), wobei die aktive RFID-Einrichtung (3) mit dem Planungsmodul (2) verbunden ist, wobei die aktive RFID-Einrichtung (3) ausgebildet ist die Daten (4) an das Planungsmodul (2) weiterzuleiten,
wobei das Planungsmodul (2) ausgebildet ist, unter Heranziehen der Daten (4), den industriellen Prozess (6) zu dokumentieren (8), zu planen (8), zu überwachen (8) und/oder zu steuern (8).

Außerdem gibt die Erfindung eine zugehörige Anlage und ein zugehöriges Verfahren an.

## Beschreibung

### HINTERGRUND DER ERFINDUNG

### Gebiet der Erfindung

Die Erfindung gibt eine Vorrichtung zur Dokumentation, Planung, Überwachung und/oder Steuerung eines industriellen Prozesses an.

Außerdem gibt die Erfindung eine zugehörige Anlage und ein zugehöriges Verfahren an.

### Beschreibung des Stands der Technik

Industrie 4.0 und die damit einhergehende Digitalisierung setzen verstärkt digitale Repräsentationen der physikalischen Welt, so genannte cyberphysische Systeme, ein. Diese dienen neben der Prozessplanung und -steuerung auch der Nachverfolgung von Prozessschritten und Teilprozessen zur Steigerung der Qualität und der Produktivität. Aktuell ist eine feingranulare Rückmeldung der Prozessstadien in Echtzeit meist nicht möglich, da häufig nur Auftragseingang zu Auftragsausgang überwacht wird.

Eine Echtzeitüberwachung eines Produktionsprozesses ermöglicht es, einfach und transparent Engstellen sowie unnötige Wartezeiten und Lieferwege aufzudecken und idealerweise zu eliminieren. Neben dem Tracing ist es bei einer späteren Fehlerursachensuche oft wichtig zu wissen, welche Zulieferteile, Werkzeuge und Messmittel während der Produktion eingesetzt wurden, um evtl. weitere betroffene Erzeugnisse identifizieren zu können.

Aktuell werden üblicherweise immer noch Laufzettel, die mit Halbfertigteilen und Fertigteilen über den Prozess begleitend mitgeführt und ausgefüllt werden, eingesetzt. Einzelne Prozessstationen, wie z.B. Mess- und Kalibrierstellen erheben bereits Werte elektronisch, aber in der Allgemeinheit ist die Prozesskette nicht abgebildet.

Durch die oft händische Überführung von Prozesskennzahlen in Laufzettel und Dokumente erfolgt eine Digitalisierung erst deutlich später oder gar nicht.

Eingesetzte Messmittel und Werkzeuge werden in der Regel nicht erfasst.

Zur Erfassung werden auch optische Handscanner und aufgeklebte, eingestanzte oder eingelaserte Codes (Barcodes, Quick-Response, DataMatrix) eingesetzt. Auch hier muss der wertschöpfende Arbeitsfluss unterbrochen werden, um den Scanvorgang durchzuführen. In staubiger oder schmutziger Umgebung können optische Codes schnell schwer erkennbar bzw. unleserlich werden.

Die Aufgabe der Erfindung besteht darin, eine Lösung für eine verbesserte Nachverfolgung, Planung, Überwachung und Steuerung eines industriellen Prozesses bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft eine Vorrichtung zur Dokumentation, Planung, Überwachung und/oder Steuerung eines industriellen Prozesses.

Die Vorrichtung weist auf:
- Mindestens ein Prozessmittel,
wobei das mindestens eine Prozessmittel je eine aktive RFID-Einrichtung aufweist,
wobei die aktive RFID-Einrichtung ausgebildet ist, Daten des industriellen Prozesses von mindestens einer passiven RFID-Antenne zu lesen,
wobei sich die Daten auf einen durchgeführten Arbeitsschritt des industriellen Prozesses, zu dem Zeitpunkt, zu welchem die aktive RFID-Einrichtung die Daten gelesen hat, beziehen,
- ein Planungsmodul, wobei die aktive RFID-Einrichtung mit dem Planungsmodul verbunden ist, wobei die aktive RFID-Einrichtung ausgebildet ist die Daten an das Planungsmodul weiterzuleiten,
wobei das Planungsmodul ausgebildet ist, unter Heranziehen der Daten, das mindestens eine Prozessmittel und dadurch den industriellen Prozess zu dokumentieren, zu planen, zu überwachen und/oder zu steuern.

Ein Aspekt der Erfindung besteht darin, Prozessmittel mit aktiven RFID-Einrichtungen auszustatten und so automatisch, durch Lesen von Daten einer passiven RFID-Antenne, welche insbesondere an Arbeitshandschuhen eines Mitarbeiters oder an einem Fertigungsroboter angebracht ist, den industriellen Prozess und die verwendeten Prozessmittel zu dokumentieren, zu planen, zu überwachen und/oder zu steuern.

Somit werden an Prozessmitteln, insbesondere an Werkzeugen, Werkstücken, Werkstückträgern, Materialkisten, Halbzeugen, führerlosen Flurförderfahrzeugen sowie weiteren Produktionsmitteln aktive RFID-Einrichtungen, insbesondere RFID-Lesegeräte oder RFID-Schreibgeräte oder kombinierte RFID-Schreib- und Lesegeräte angebracht. Diese sind kabelgebunden oder per Funk mit dem Planungsmodul, insbesondere dem Enterprise Resource Planning (ERP), verbunden.

In einer bevorzugten Variante der Erfindung tragen Produktionsmitarbeiter Arbeitshandschuhe mit eingearbeiteten passiven RFID-Antennen mit Elektronik und Speichern, so genannte RFID-Tags. Diese werden kabellos durch die aktive RFID-Einrichtungen, insbesondere Lese- bzw. Schreibeinheiten, mit Energie versorgt. Das hat den Vorteil, dass der Handschuh und die eingebauten passiven RFID-Antennen keine eigene Energieversorgung in Form von Batterien oder Akkus benötigen.

In einer Weiterbildung der Erfindung ist die RFID- Einrichtung als NFC-Einrichtung und die passive RFID-Antenne als passiver NFC-Antenne ausgebildet.

In einer Weiterbildung der Erfindung ist der industrielle Prozess als:
- ein Produktionsprozess,
- ein Fertigungsprozess,
- ein Automatisierungsprozess,
- ein Logistikprozess,
- ein Prozess in einem Energiekraftwerk,
- ein Datenerhebungsprozess einer technischen Anlage oder
- ein Steuerungsprozess
ausgebildet.

Das hat den Vorteil, dass die Vorrichtung für verschiedene industrielle Prozesse verwendet werden kann.

In einer weiteren Weiterbildung der Erfindung ist das Planungsmodul ausgebildet, den Einsatz des mindestens einen Prozessmittels unter Heranziehen der Daten zu dokumentieren, planen, überwachen und/oder steuern. Das hat den Vorteil einer verbesserten Ressourcenplanung und Nachverfolgung des Einsatzes des Prozessmittels.

In einer weiteren Weiterbildung der Erfindung ist das Planungsmodul als Enterprise Resource Planning (ERP) ausgebildet.

In einer weiteren Weiterbildung der Erfindung ist die aktive RFID-Einrichtung kabellos mit dem Planungsmodul verbunden ist. Das hat den Vorteil einer kabellosen Datenübertragung zwischen der RFID-Einrichtung und dem Planungsmodul.

In einer weiteren Weiterbildung der Erfindung ist die erfindungsgemäße Vorrichtung ausgebildet, mehrere Teile einer technischen Anlage zu überwachen. Das hat den Vorteil, dass die Vorrichtung auch für industrielle Prozesse, die sich über mehrere Teile einer technischen Anlage erstrecken, verwendet werden kann.

In einer weiteren Weiterbildung der Erfindung ist das mindestens eine Prozessmittel als:
- ein Werkzeug,
- ein Messmittel,
- ein Erzeugnis,
- ein Rohmaterial
- ein Werkstück,
- ein Behältnis zur Aufbewahrung,
- ein Werkstückträger,
- ein Bestandteil einer Maschine,
- ein Halbzeug,
- persönliche Schutzausrüstung,
- ein Arbeitshandschuh,
- ein Aufkleber,
- ein Fahrzeug und/oder
- ein führerloses Fahrzeug
ausgebildet.

Das hat den Vorteil, dass die Vorrichtung mit verschiedenen Prozessmitteln eingesetzt werden kann. Die RFDI-Einrichtung kann als:
ein Werkzeug,
- ein Messmittel,
- ein Erzeugnis,
- ein Rohmaterial
- ein Werkstück,
- ein Behältnis zur Aufbewahrung,
- ein Werkstückträger,
- ein Bestandteil einer Maschine und/oder
- ein Halbzeug,
ausgebildet sein, welches die RFID-Einrichtung trägt und an das sich die RFDI-Antenne annähernd.

Alternativ kann das Prozessmittel als:
- persönliche Schutzausrüstung,
- ein Arbeitshandschuh,
- ein Aufkleber,
- ein Fahrzeug und/oder
- ein führerloses Fahrzeug
ausgebildet sein, welches die RFID-Einrichtung trägt und sich die RFDI-Antenne annähert.

In einer weiteren Weiterbildung der Erfindung sind die Daten von:
- einem Status des industriellen Prozesses und/oder
- externen Umständen des industriellen Prozesses und/oder
- internen Umständen des industriellen Prozesses und/oder
- einem Aufenthaltsort des Prozessmittels
jeweils zu dem Zeitpunkt, zu welchem die aktive RFID-Einrichtung die Daten gelesen hat, abhängig.

Das hat den Vorteil, dass der Status, die externe Umstände und/oder die internen Umstände des industriellen Prozesses und/oder der Zeitpunkt, zu welchem die passive RFID-Antenne die Daten gelesen hat, in die Dokumentation, Planung, Überwachung und/oder Steuerung einbezogen werden.

In einer weiteren Weiterbildung der Erfindung weist die Vorrichtung außerdem auf:
- mindestens ein zweites Prozessmittel,
wobei das mindestens eine zweite Prozessmittel eine zweite aktive RFID-Einrichtung aufweist,
wobei die zweite aktive RFID-Einrichtung ausgebildet ist, Daten des industriellen Prozesses von mindestens einer passiven RFID-Antenne zu lesen.

Das hat den Vorteil, dass durch die Vorrichtung eine Vielzahl von Prozessmitteln, verteilt über mehrere Anlagen, und dadurch der industrielle Prozess dokumentiert, geplant, überwacht und/oder gesteuert werden kann.

In einer weiteren Weiterbildung der Erfindung codieren die Daten:
- einen Identifizier des mindestens einen Prozessmittels und/oder
- einen Prozessschritt an dem mindestens einem Prozessmittels und/oder
- einen Zeitpunkt und/oder
- einen speziellen Benutzer.

Kommt eine passive RFID-Antenne, insbesondere integriert in einen Handschuh eines Fertigungsmitarbeiters oder in einen Fertigungsroboter, in die Nähe der aktiven RFID-Einrichtung, insbesondere in die Nähe eines oben erwähnten Lesers oder Schreibers, so wird dies automatisch registriert und an das Planungsmodul weitergeleitet.

Somit kann automatisch und ohne weitere Aktion des Produktionsmitarbeiters durch den Identifizier des mindestens einen Prozessmittels getrackt werden, welches Werkzeug bzw. welches Zulieferteil (Chargennummer) verwendet wurde.

Außerdem kann so automatisch der Prozessschritt an dem mindestens einem Prozessmittels, insbesondere mit dem zugehörigen Zeitpunkt, insbesondere mit dem zugehörigen Benutzer, insbesondere Produktionsmitarbeiter getrackt werden.

In einer weiteren Weiterbildung der Erfindung gibt das Planungsmodul unter Herziehen der Daten ein Warnsignal aus.

Das hat den Vorteil, dass die Vorrichtung mit dem Echtzeittracing auch für ein direktes Feedback, insbesondere für den Produktionsmitarbeiter, genutzt werden kann. So wird der Griff zu einem "falschen" Prozessmittel, insbesondere einem Werkzeug, einem als ungültig markierten Messmittel oder ein Griff in eine falsche Kiste im Kleinteilelager durch ein visuelles und/oder akustisches Signal als Fehler kenntlich gemacht.

Das hat den Vorteil, dass so zudem Fertigungsfehler minimiert und für eine spätere Nachvollziehbarkeit lückenlos dokumentiert werden.

In einer weiteren Weiterbildung der Erfindung ist das Warnsignal:
- akustisch und/oder
- optisch und/oder
- in Form von Vibration
ausgebildet.

Das hat den Vorteil, dass die Vorrichtung mit dem Echtzeittracing auch für ein direktes Feedback, insbesondere für den Produktionsmitarbeiter, in unterschlichen Ausprägungen genutzt werden kann.

In einer weiteren Weiterbildung der Erfindung gibt das Planungsmodul unter Herziehen der Daten Informationen, welche den industriellen Prozess beschreiben, aus. Das hat den Vorteil, dass Informationen zu dem industriellen Prozess, den vollzogenen Arbeitsschritten, den eingesetzten Prozessmitteln und/oder Detail hierzu ausgegeben und zur Verfügung gestellt werden können.

In einer weiteren Weiterbildung der Erfindung ist die aktive RFID-Einrichtung ausgebildet, die Daten an das Planungsmodul:
- automisch zu definierbaren Zeiten und/oder
- unmittelbar und/oder
- zu manuell bestimmbaren Zeiten
weiterzuleiten.

Das hat den Vorteil, dass das Planungsmodul automisch zu definierbaren Zeiten und/oder zu manuell bestimmbaren Zeiten und/oder unmittelbar Daten erhält, wobei sich die Daten auf einen durchgeführten Arbeitsschritt des industriellen Prozesses, zu dem Zeitpunkt, zu welchem die aktive RFID-Einrichtung die Daten gelesen hat, beziehen.

In einer weiteren Weiterbildung der Erfindung ist die aktive RFID-Einrichtung ausgebildet zweite Daten an die passive RFID-Antenne zu senden.

Das hat den Vorteil, dass die aktive RFID-Einrichtung, insbesondere das aktive RFID Schreib-/Lesegerät, ausgebildet ist, zusätzliche Informationen in den Handschuh einzubringen.

Somit können Daten von Prozessmitteln, insbesondere von Zulieferteilen, auch über einen zweiten RFID-Leser, insbesondere in einem Handschuh, an das Planungsmodul, insbesondere in das lokale ERP, weitergeleitet werden. So kann insbesondere die Seriennummer des verwendeten Bauteils dokumentiert und unmittelbar an das ERP übermittelt werden. Dies reduziert den Verkabelungsaufwand zu den aktiven RFID-Einrichtungen bzw. ermöglicht es auch Fremdgeräte zu nutzen, ohne einen direkten Zugang in das lokale IT-System zu erzwingen.

Die Erfindung umfasst außerdem eine industrielle Anlage aufweisend eine erfindungsgemäße Vorrichtung. Das hat den Vorteil, dass die Vorrichtung auch für industrielle Prozesse, die sich über die technische Anlage erstrecken, verwendet werden kann.

Die Erfindung umfasst außerdem ein Verfahren zur Dokumentation, Planung, Überwachung und/oder Steuerung eines industriellen Prozesses.

Das Verfahren weist die folgenden Schritte auf:
- Lesen von Daten des industriellen Prozesses von mindestens einer passiven RFID-Antenne durch mindestens eine aktive RFID-Einrichtung, wobei die mindestens eine aktive RFID-Einrichtung von je mindestens einem Prozessmittel aufgewiesen wird,
   wobei sich die Daten auf einen durchgeführten Arbeitsschritt des industriellen Prozesses, zu dem Zeitpunkt, zu welchem die mindestens eine aktive RFID-Einrichtung die Daten gelesen hat, beziehen,
- Verbinden der mindestens einen aktiven RFID-Einrichtung mit einem Planungsmodul,
- Weiterleiten der Daten an das Planungsmodul durch die mindestens eine aktive RFID-Einrichtung,
- Dokumentieren, Planen, Überwachen und/oder Steuern des mindestens einem Prozessmittel unter Heranziehen der Daten durch das Planungsmodul.

In einer weiteren Weiterbildung der Erfindung ist das erfindungsgemäße Verfahren zum Betrieb einer erfindungsgemäßen Vorrichtung ausgebildet.

Im Folgenden wird auf weitere allgemeine Vorteile der Erfindung eingegangen.

Die Erfindung bietet den Vorteil, dass die Erfassung von Informationen (Seriennummern, Werkzeugtypen, Kleinteile) vollautomatisch und implizit stattfindet. Der Produktionsmitarbeiter muss seinen Arbeitsprozess nicht unterbrechen, um Lese- oder Eingabegeräte zur Hand zu nehmen, um die Erfassung durchzuführen.

In den meisten Fällen müssen Mitarbeiter in einer Fertigung (z.B. Monteure) ohnehin Schutzkleidung wie beispielsweise Handschuhe tragen. Der Handschuh mit integrierten RFID Tags dient dabei selbst als Tracking & Tracing Werkzeug, indem alle RFID Schreib-/Lesegeräte notwendige Informationen in den Handschuh übertragen und dort speichern. Der Handschuh selbst kann wiederum ausgelesen werden, um die gesammelten Informationen an das ERP weiterzugeben.

Ein weiterer Vorteil ist, dass keine Energieversorgung der passiven RFID-Tags im Handschuh notwendig ist. Die notwendige Energie, um die RFID Tags auszulesen oder zu beschreiben, wird durch die Reader-Antenne des aktiven NFC Lese-/Schreibgeräts bereitgestellt.

Zudem findet Tracking und Tracing wesentlicher Prozessschritte in Echtzeit statt. Hier kann neben der digitalen Abbildung des Prozesses und der Fortschrittsvisualisierung auch eine Nachträgliche Prozessanalyse durchgeführt werden. Sei es zur Prozessoptimierung durch Auffinden von Stauungen und Leerlaufzeiten einzelner Abschnitte oder zur nachträglichen Analyse von Serienfehlern, z.B. bei mehreren redundanten Fertigungslinien, ob ein Fehler nur in einer der Linien auftaucht.

Außerdem kann bei Abweichungen und Fehlern in Echtzeit reagiert werden indem z.B. ein Messmittel bei Auffälligkeiten zentral gesperrt werden und ein weiterer Einsatz sofort verhindert wird.

Zusätzlich ist direktes Feedback für den Produktionsmitarbeiter, beispielsweise bei einem Griff zum falschen Werkzeug, zu einem als ungültig markierten Messmittel oder in eine falsche Kiste im Kleinteilelager, welches durch ein visuelles, akustisches oder haptisches Signal als Fehler kenntlich gemacht wird möglich.

Das Feedback kann über eine visuelle Anzeige in Form eines Displays o.ä. erfolgen. Alternativ kann ein Signal auf ein Smartphone/Smartwatch in Form eines Vibrationsalarms kenntlich gemacht werden.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: eine schematische Darstellung einer Vorrichtung (1) zur Dokumentation (8), Planung (8), Überwachung (8) und/oder Steuerung (8) eines industriellen Prozesses (6) und
- Fig. 2: ein Ablaufdiagramm eines Verfahrens zur Dokumentation (8), Planung (8), Überwachung (8) und/oder Steuerung (8) eines industriellen Prozesses (6).

### DETAILLIERTE BESCHREIBUNG DER ERFINDUNG

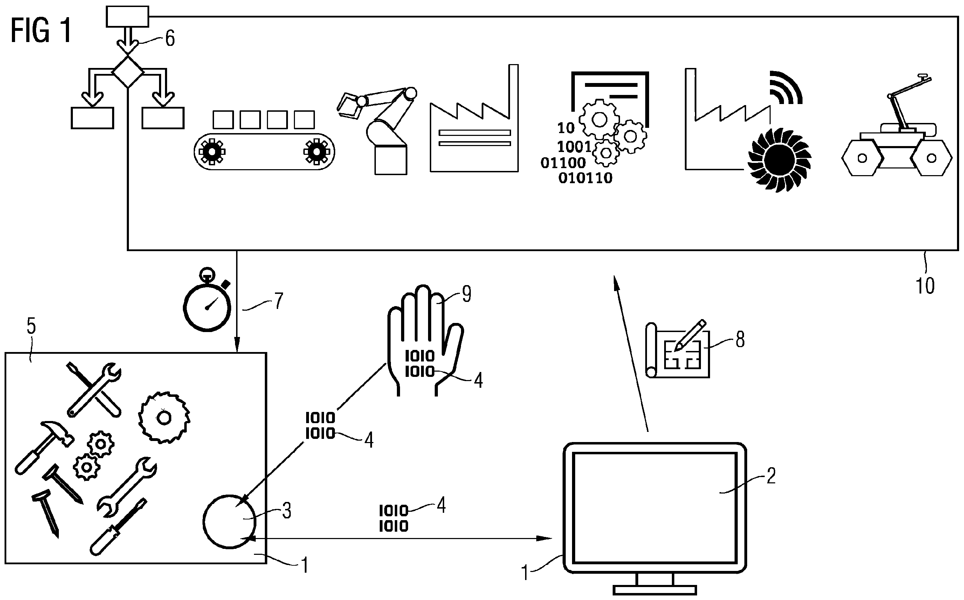

Fig. 1 zeigt eine schematische Darstellung einer Vorrichtung 1 zur Dokumentation 8, Planung 8, Überwachung 8 und/oder Steuerung 8 eines industriellen Prozesses 6.

Die Vorrichtung 1 weist auf:
- mindestens ein Prozessmittel 5,
wobei das mindestens eine Prozessmittel 5 je eine aktive RFID-Einrichtung 3 aufweist,
wobei die aktive RFID-Einrichtung 3 ausgebildet ist, Daten 4 des industriellen Prozesses 6 von mindestens einer passiven RFID-Antenne 9 zu lesen,
wobei sich die Daten 4 auf einen durchgeführten Arbeitsschritt des industriellen Prozesses 6, zu dem Zeitpunkt 7, zu welchem die aktive RFID-Einrichtung 3 die Daten 4 gelesen hat, beziehen,
- ein Planungsmodul 2, wobei die aktive RFID-Einrichtung 3 mit dem Planungsmodul 2 verbunden ist, wobei die aktive RFID-Einrichtung 3 ausgebildet ist die Daten 4 an das Planungsmodul 2 weiterzuleiten,
wobei das Planungsmodul 2 ausgebildet ist, unter Heranziehen der Daten 4, den industriellen Prozess 6 zu dokumentieren 8, zu planen 8, zu überwachen 8 und/oder zu steuern 8.

Der industrielle Prozess 6 ist als:
- ein Produktionsprozess,
- ein Fertigungsprozess,
- ein Automatisierungsprozess,
- ein Logistikprozess,
- ein Prozess in einem Energiekraftwerk,
- ein Datenerhebungsprozess einer technischen Anlage oder
- ein Steuerungsprozess
ausgebildet.

Die Vorrichtung 1 ist ausgebildet, mehrere Teile einer technischen Anlage 10 zu überwachen.

Das mindestens eine Prozessmittel 5 ist als:
- ein Werkzeug,
- ein Messmittel,
- ein Erzeugnis,
- ein Rohmaterial
- ein Werkstück,
- ein Behältnis zur Aufbewahrung,
- ein Werkstückträger,
- ein Bestandteil einer Maschine,
- ein Halbzeug,
- persönliche Schutzausrüstung,
- ein Arbeitshandschuh,
- ein Aufkleber,
- ein Fahrzeug und/oder
- ein führerloses Fahrzeug
ausgebildet.

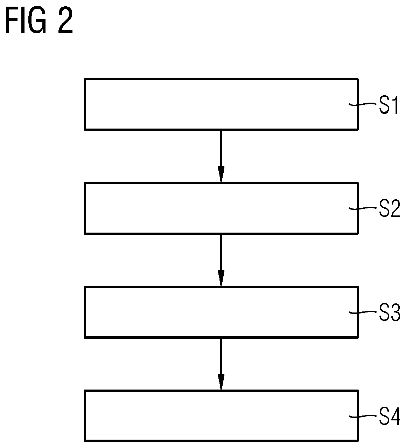

Fig. 2 zeigt ein Ablaufdiagramm eines Verfahrens zur Dokumentation 8, Planung 8, Überwachung 8 und/oder Steuerung 8 eines industriellen Prozesses 6.

Das Verfahren weist die folgenden Schritte auf:
- Schritt S1: Lesen von Daten 4 des industriellen Prozesses 6 von mindestens einer passiven RFID-Antenne 9 durch mindestens eine aktive RFID-Einrichtung 3, wobei die mindestens eine aktive RFID-Einrichtung 3 von je mindestens einem Prozessmittel 5 aufgewiesen wird,
   wobei sich die Daten 4 auf einen durchgeführten Arbeitsschritt des industriellen Prozesses 6, zu dem Zeitpunkt 7, zu welchem die mindestens eine aktive RFID-Einrichtung 3 die Daten 4 gelesen hat, beziehen,
- Schritt S2: Verbinden der mindestens einen aktiven RFID-Einrichtung 3 mit einem Planungsmodul 2,
- Schritt S3: Weiterleiten der Daten 4 an das Planungsmodul 2 durch die mindestens eine aktive RFID-Einrichtung 3
- Schritt S4: Dokumentieren 8, Planen 8, Überwachen 8 und/oder Steuern 8 des industriellen Prozesses 6 unter Heranziehen der Daten 4 durch das Planungsmodul 2.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Vorrichtung (1) zur Dokumentation (8), Planung (8), Überwachung (8) und/oder Steuerung (8) eines industriellen Prozesses (6),
aufweisend:
- mindestens ein Prozessmittel (5),
wobei das mindestens eine Prozessmittel (5) je eine aktive RFID-Einrichtung (3) aufweist,
wobei die aktive RFID-Einrichtung (3) ausgebildet ist, Daten (4) des industriellen Prozesses (6) von mindestens einer passiven RFID-Antenne (9) zu lesen,
wobei sich die Daten (4) auf einen durchgeführten Arbeitsschritt des industriellen Prozesses (6), zu dem Zeitpunkt (7), zu welchem die aktive RFID-Einrichtung (3) die Daten (4) gelesen hat, beziehen,
- ein Planungsmodul (2), wobei die aktive RFID-Einrichtung (3) mit dem Planungsmodul (2) verbunden ist, wobei die aktive RFID-Einrichtung (3) ausgebildet ist die Daten (4) an das Planungsmodul (2) weiterzuleiten,
wobei das Planungsmodul (2) ausgebildet ist, unter Heranziehen der Daten (4), den industriellen Prozess (6) zu dokumentieren (8), zu planen (8), zu überwachen (8) und/oder zu steuern (8).

2. Vorrichtung (1) nach Anspruch 1,
wobei der industrielle Prozess (6) als:
- ein Produktionsprozess,
- ein Fertigungsprozess,
- ein Automatisierungsprozess,
- ein Logistikprozess,
- ein Prozess in einem Energiekraftwerk,
- ein Datenerhebungsprozess einer technischen Anlage oder
- ein Steuerungsprozess
ausgebildet ist.

3. Vorrichtung (1) nach einem der vorhergehenden Ansprüche, wobei das Planungsmodul (2) ausgebildet ist, einen Einsatz des mindestens einen Prozessmittels (5) unter Heranziehen der Daten (4) zu dokumentieren (8), planen (8), überwachen (8) und/oder steuern (8).

4. Vorrichtung (1) nach einem der vorhergehenden Ansprüche, ausgebildet, mehrere Teile einer technischen Anlage (10) zu überwachen.

5. Vorrichtung (1) nach einem der vorhergehenden Ansprüche, wobei das mindestens eine Prozessmittel (5) als:
- ein Werkzeug,
- ein Messmittel,
- ein Erzeugnis,
- ein Rohmaterial
- ein Werkstück,
- ein Behältnis zur Aufbewahrung,
- ein Werkstückträger,
- ein Bestandteil einer Maschine,
- ein Halbzeug,
- persönliche Schutzausrüstung,
- ein Arbeitshandschuh,
- ein Aufkleber,
- ein Fahrzeug und/oder
- ein führerloses Fahrzeug
ausgebildet ist.

6. Vorrichtung (1) nach einem der vorhergehenden Ansprüche, wobei die Daten (4) von:
- einem Status des industriellen Prozesses (6) und/oder
- externen Umständen des industriellen Prozesses (6) und/oder
- internen Umständen des industriellen Prozesses (6) und/oder
- einem Aufenthaltsort des Prozessmittels (5)
jeweils zu dem Zeitpunkt (7), zu welchem die aktive RFID-Einrichtung (3) die Daten (4) gelesen hat, abhängig sind.

7. Vorrichtung (1) nach einem der vorhergehenden Ansprüche, aufweisend:
- mindestens ein zweites Prozessmittel,
wobei das mindestens eine zweite Prozessmittel eine zweite aktive RFID-Einrichtung aufweist,
wobei die zweite aktive RFID-Einrichtung ausgebildet ist, Daten (4) des industriellen Prozesses (6) von mindestens einer passiven RFID-Antenne (9) zu lesen.

8. Vorrichtung (1) nach einem der vorhergehenden Ansprüche, wobei die Daten:
- einen Identifizier des mindestens einen Prozessmittels (5) und/oder
- einen Prozessschritt an dem mindestens einem Prozessmittels (5) und/oder
- einen Zeitpunkt und/oder
- einen speziellen Benutzer
codieren.

9. Vorrichtung (1) nach einem der vorhergehenden Ansprüche, wobei das Planungsmodul (2) unter Herziehen der Daten (4) ein Warnsignal ausgibt,
wobei das Warnsignal:
- akustisch und/oder
- optisch und/oder
- in Form von Vibration
ausgebildet ist.

10. Vorrichtung (1) nach einem der vorhergehenden Ansprüche, wobei das Planungsmodul (2) unter Herziehen der Daten (4) Informationen, welche den industriellen Prozess (6) beschreiben, ausgibt.

11. Vorrichtung (1) nach einem der vorhergehenden Ansprüche, wobei die aktive RFID-Einrichtung (3) ausgebildet ist, die Daten (4) an das Planungsmodul (2):
- automisch zu definierbaren Zeiten und/oder
- zu manuell bestimmbaren Zeiten
weiterzuleiten.

12. Vorrichtung (1) nach einem der vorhergehenden Ansprüche, wobei die aktive RFID-Einrichtung (3) ausgebildet ist zweite Daten an die passive RFID-Antenne (9) zu senden.

13. Industrielle Anlage aufweisend eine Vorrichtung (1) nach einem der Ansprüche 1 bis 12.

14. Verfahren zur Dokumentation (8), Planung (8), Überwachung (8) und/oder Steuerung (8) eines industriellen Prozesses (6), mit den Schritten:
- Lesen (S1) von Daten (4) des industriellen Prozesses (6) von mindestens einer passiven RFID-Antenne (9) durch mindestens eine aktive RFID-Einrichtung (3), wobei die mindestens eine aktive RFID-Einrichtung (3) von je mindestens einem Prozessmittel (5) aufgewiesen wird,
wobei sich die Daten (4) auf einen durchgeführten Arbeitsschritt des industriellen Prozesses (6), zu dem Zeitpunkt (7), zu welchem die mindestens eine aktive RFID-Einrichtung (3) die Daten (4) gelesen hat, beziehen,
- Verbinden (S2) der mindestens einen aktiven RFID-Einrichtung (3) mit einem Planungsmodul (2),
- Weiterleiten (S3) der Daten (4) an das Planungsmodul (2) durch die mindestens eine aktive RFID-Einrichtung (3),
- Dokumentieren (8), Planen (8), Überwachen (8) und/oder Steuern (8) (S4) des industriellen Prozesses (6) unter Heranziehen der Daten (4) durch das Planungsmodul (2).

15. Verfahren nach Anspruch 14 zum Betrieb einer Vorrichtung (1) nach einem der Ansprüche 1 bis 12.
